# EUROPÄISCHE PATENTANMELDUNG

(11) **EP 3 862 171 A1**
(43) Veröffentlichungstag der Anmeldung: **11.08.2021**
(21) Anmeldenummer: 21155494.4
(22) Anmeldetag: 05.02.2021
(51) Int. Cl.: B29C 70/42, B29D 99/00, B29C 70/30, B29C 70/34, B29C 70/70, B29C 31/00, B29C 70/54, B29C 39/00, B32B 5/18, B29L 31/30

(54) **VERFAHREN ZUR HERSTELLUNG EINES KAROSSERIEBAUTEILS UND KAROSSERIEBAUTEIL**

(30) Priorität: 06.02.2020 DE 102020103087
(71) Anmelder: Georg Fritzmeier GmbH & Co. KG, 85653 Aying (DE)
(72) Erfinder: FRAUNHOFER. Stephan, 85653 Großhelfendorf (DE)
(74) Vertreter: Winter, Brandl - Partnerschaft mbB

(57) **Zusammenfassung**

Offenbart ist ein Verfahren zur Herstellung eines Karosseriebauteils mittels Long Fibre Injection.

Offenbart ist zudem ein gemäß dem Verfahren hergestelltes Karosseriebauteil.

## Beschreibung

Die Erfindung betrifft ein Verfahren zur Herstellung eines faserverstärkten Karosseriebauteils in Sandwichbauweise gemäß Anspruch 1 und ein Karosseriebauteil gemäß Anspruch 13.

Ein derartiges Karosseriebauteil ist beispielsweise ein auf einem Fahrerhaus eines LKWs befestigbares Hochdach. Aus der DE 10 2007 050 951 A1 der Anmelderin ist es bekannt, ein flächiges Karosseriebauteil in Kunststoff, aus einer Außenschale und einer Innenschale auszubilden, die nach dem stoffschlüssigen und kraftbeaufschlagten Verbinden, zum Beispiel durch Kleben, dem Karosseriebauteil eine Steifigkeit verleihen, die mit derjenigen eines herkömmlichen Stahl-Karosseriebauteils vergleichbar ist, wobei das Karosseriebauteil deutlich weniger Gewicht hat. Die Herstellung der Außenschale kann beispielsweise im SMC (Sheet Moulding Compound)- oder RTM (Resin Transfer Moulding)- oder LFI (Long Fibre Injection)-Verfahren erfolgen. Bei diesen Verfahren liegt die Formmasse praktisch mit allen notwendigen Komponenten, beispielsweise mit Harzen und Verstärkungsfasern vorgemischt vor und wird dann durch Pressen (SMC) oder Einspritzen (RTM, LFI) in einem Werkzeug verarbeitet.

Beim LFI Verfahren erfolgt die direkte Verarbeitung von aufgerollt vorgelegter Glasfaser mit einem PUR Hartschaum in einem Presswerkzeug. Dabei wird eine an einer Matrize angeordnete, tiefgezogene Hartfolie, die später die Außenhaut des Karosseriebauteils bildet, direkt mit dem PUR Hartschaum hinterschäumt. So wird eine Oberfläche der Außenhaut erzielt, die höchsten Ansprüchen an Anmutung und Qualität genügt, sodass aufwändige Lackierarbeiten und die hierfür erforderliche Logistik eingespart werden können.

Die Druckschrift DE 102 21 581 A1 zeigt ein faserverstärktes Karosseriebauteil als LFI Sandwich mit einer ABS-, ASA-PC-, ASA- oder PC-Folie als Außenhaut, zwei LFI Schichten und einem zwischen den beiden angeordneten Distanzhalter aus Kartonwabe, Kunststoffwabe oder Kunststoffschaum.

Die Druckschrift DE 102 44 287 A1 beschreibt die Herstellung eines faserverstärkten Karosseriebauteils in LFI-Sandwichbauweise. Eine LFI Schicht wird auf eine in die Matrize eingelegte Folie aufgetragen. Im Folgenden wird eine planare Spacerschicht aus wabiger Pappe Wellblech oder expandierbarem Kunststoff, PP, PC, PS eingebracht. Es folgt eine zweite LFI-Schicht und ein Verpressen.

Demgegenüber liegt der Erfindung die Aufgabe zugrunde, ein Verfahren zur Herstellung eines Karosseriebauteils mittels Long Fibre Injection (LFI) zu schaffen, das zumindest prozesstechnisch weniger aufwändig ist. Eine weitere Aufgabe besteht darin, ein mittels LFI faserverstärktes Karosseriebauteil zu schaffen, das weniger aufwändig oder kostengünstiger hergestellt ist.

Diese Aufgaben werden gelöst durch ein Verfahren mit den Merkmalen des Patentanspruchs 1 und durch ein Karosseriebauteil mit den Merkmalen des Patentanspruchs 13.

Vorteilhafte Weiterbildungen der Erfindung sind Gegenstand der Unteransprüche.

Ein erfindungsgemäßes Verfahren zur Herstellung eines faserverstärkten Karosseriebauteils in Long Fibre Injection (LFI) Sandwichbauweise dient beispielsweise der Herstellung eines Hochdachs, insbesondere eines LKWs. Es hat zumindest die Schritte "Auftragen einer ersten LFI-Schicht unmittelbar oder mittelbar auf einer Matrize", "Ablegen eines vorgefertigten ein- oder mehrteiligen Schaumkerns auf die erste LFI-Schicht". Dabei ist der Schaumkern an einer gekrümmten Oberfläche des herzustellenden Karosseriebauteils orientiert vorgefertigt, der er mit Abstand oder Offset folgt. In anderen Worten weist der Schaumkern beim Ablegen auf der ersten LFI Schicht bereits seine am herzustellenden Karosseriebauteil oder Fertigteil orientierte Form auf. Es folgen die Schritte "Auftragen einer zweiten Schicht auf den Schaumkern" und "Pressen des so gebildeten Sandwichs mit einer Patrize".

Verglichen mit dem herkömmlichen Verfahren, das den Prozessschritt aufweist, in dem die erste LFI-Schicht direkt hinterschäumt wird, vereinfachen der bereits vorgefertigte Schaumkern und dessen Ablage auf der ersten LFI-Schicht die Herstellung des Karosseriebauteils vorrichtungs- und prozesstechnisch. So kann ein, insbesondere eigensteifes, Karosseriebauteil in einem Prozessschritt hergestellt werden. Verglichen mit dem herkömmlichen Verfahren, in dem der planare, plattig vorgefertigte Kern eingebracht wird, ermöglicht das Ablegen des erfindungsgemäß an der Form des herzustellenden Karosserieteils orientierten Schaumkerns eine einfachere Fertigung insbesondere großer, gekrümmter Karosseriebauteile mit starker Beanspruchung, wie insbesondere Hochdächer für LKWs. Im Herstellungsprozess zeigt sich der Vorteil, dass der so vorgefertigte Schaumkern im Gegensatz zu plattigem Ausgangsmaterial in gekrümmten Bereichen kein Rücksprungverhalten zeigt.

Der Schaumkern kann zumindest abschnittsweise der Außenfläche des Karosserieteils folgend, der Innenfläche des Karosserieteils folgend oder beiden mit Abstand folgend vorgefertigt sein.

Da die Oberflächen der Matrize und der Patrize parallel zur jeweiligen Oberfläche des herzustellenden Karosseriebauteils sind, sei darauf hingewiesen, dass der Schaumkern der Oberfläche der Matrize, der Oberfläche der Patrize oder beiden mit Abstand folgend vorgefertigt sein kann.

In einer Weiterbildung mit vergleichsweise geringem Aufwand für die Konstruktion des Schaumkerns ist dieser mit zumindest abschnittsweise konstantem Abstand zur Oberfläche vorgefertigt.

Insbesondere bei sehr dünner LFI Schicht und/oder bei sehr kleinem konstanten Abstand ist der Schaumkern formgenau oder nahezu formgenau vorgefertigt.

Alternativ oder ergänzend kann der Schaumkern mit zumindest abschnittsweise variablem Abstand zur Oberfläche vorgefertigt sein.

In einer Weiterbildung ist der Schaumkern mit abschnittsweise unterschiedlicher Dicke vorgefertigt, wodurch gezielt Einfluss auf die Steifigkeit des Karosseriebauteils bei geringem Gewicht genommen werden kann.

In der Weiterbildung ist die zweite Schicht zumindest bezüglich ihres Materials mit der ersten LFI-Schicht gleich aufgebaut. Insbesondere ist auch die zweite Schicht eine LFI-Schicht. So kann beim Auftragen der zweiten Schicht auf eine gleiche Einheit zum Auftragen der ersten LFI Schicht zurückgegriffen werden.

Die Einheit weist vorzugsweise eine Dosiereinrichtung, jeweils für die vom Roving abgewickelte Glasfaser und den die Kunststoffmatrix der jeweiligen LFI Schicht bildenden Kunststoff, insbesondere PUR, auf. Des Weiteren hat sie ein Schneidwerk für die Glasfasern, ein Mischwerk zum Mischen der geschnittenen Glasfasern mit dem Kunststoff und einem LFI Sprühkopf zum Auftragen der LFI Schicht(en).

Die erste LFI-Schicht kann, sofern keine hohen Anforderungen an ihre Anmutung oder keine Designrelevanz besteht, als Außenhaut des Karosseriebauteils fungieren.

In einer Weiterbildung, die hohe Anforderungen an das Design und die Anmutung erfüllt, erfolgt der Schritt "Auftragen der ersten LFI-Schicht" nicht unmittelbar auf die Matrize, sondern auf eine Folie, insbesondere Hartfolie. Hierzu werden Schritte "Einlegen einer Folie in die Matrize" und "Auftragen der ersten LFI-Schicht auf diese Folie" durchgeführt. Dabei ist die Folie vorzugsweise eine sogenannte Oberflächen- oder Außenhautsichtfolie.

In einer Weiterbildung ist diese vor ihrem Einlegen in die Matrize tiefgezogen gefertigt.

In der Matrize ist die Folie vorzugsweise mittels Vakuum positioniert und/oder gehalten. Auf diese Weise sind keine weiteren, insbesondere mechanischen, Haltevorrichtungen nötig.

Die Folie ist beispielsweise aus ASA-, ABS-, PMMA-, oder PC-Polymer gebildet.

Vorzugsweise hat die Folie eine Stärke von etwa 1 - 5 mm, insbesondere 1 - 3 mm. So wird einerseits eine gewisse Schlagfestigkeit erzielt und andererseits zur Steifigkeit des Karosseriebauteils beigetragen. Über die genannte Stärke wird zudem die gewünschte Oberflächenqualität und Anmutung erzielt, indem beispielsweise kleinere Fehler der ersten LFI-Schicht oder darin auftretender Schwund kompensiert werden.

In einer Weiterbildung des Verfahrens erfolgt vor dem Schritt "Auftragen der erste LFI-Schicht unmittelbar oder mittelbar auf die Matrize" ein Schritt "manuelles oder automatisiertes Einlegen des Schaumkerns in die Matrize". Insbesondere erfolgt dabei auch eine Positionierung des Schaumkerns in der Matrize. Aus dieser korrekten Relativposition des Schaumkerns zur Matrize ist es dann leicht möglich, den Schaumkern korrekt positioniert aufzunehmen und für das spätere Ablegen auf der ersten LFI-Schicht vorzuhalten.

In einer Weiterbildung des Verfahrens erfolgt das Aufnehmen des eingelegten, insbesondere positionierten Schaumkerns, durch die Patrize. Hierzu ist ein Schließ- und ein Öffnungshub des Werkzeugs vorgesehen.

Zum Aufnehmen, und insbesondere zum folgenden Halten des Schaumkerns, wird der Schaumkern in einer Weiterbildung des Verfahrens in einem Schritt mechanisch und/oder magnetisch mit der Patrize gekoppelt.

Insbesondere zu diesem Zweck ist an oder in den Schaumkern wenigstens ein mechanisches oder magnetisches Koppelelement, insbesondere ein Blech, an- oder eingeschäumt.

Zum magnetischen Aufnehmen und Halten weist die Patrize wenigstens einen Elektromagneten auf. Dieser ist insbesondere schaltbar oder stetig verstellbar.

Der Schritt "Ablegen des vorgefertigten Schaumkerns auf die erste LFI-Schicht" erfolgt in einer Weiterbildung durch ein Entkoppeln des Schaumkerns von der Patrize. Insbesondere erfolgt dies durch kraftlosschalten des oder der Elektromagnete.

In einer vorteilhaften Weiterbildung erfolgt vor einem "Abheben der Patrize vom entkoppelten Schaumkern" ein "Nachdrücken des abgelegten Schaumkerns an- oder abschnittsweise in die erste LFI-Schicht" durch die Patrize. Auf diese Weise ist der Schaumkern vor dem Schritt "Pressen" inniger mit der ersten LFI-Schicht verbunden und sicherer positioniert.

Der Schaumkern kann als Formschaum, insbesondere aus PUR, oder als Partikelschaum, insbesondere aus EPS oder PP, vorgefertigt sein. Entsprechend ist er in einem Formschaumverfahren oder Partikelschaumverfahren vorgefertigt. Alternativ kann er aus Plattenware gefertigt sein. Insbesondere weist er Raumgewicht von etwa 50 - 200 kg/m³ auf.

In einer Weiterbildung beginnt mit dem Schritt "Pressen", beziehungsweise mit dem Schließen des Werkzeugs durch Aufsetzen der Patrize auf die zweite Schicht, der Ablauf einer LFI-Reaktionszeit oder Aushärtezeit.

In einer Weiterbildung wird zumindest zeitweise während dem "Pressen" eine von der Matrize und Patrize abschnittsweise begrenzte Kavität von einer Vakuumschürze oder einem Vakuumrahmen verschlossen und evakuiert. Auf diese Weise können Lufteinschlüsse in der Kavität, und damit im Karosseriebauteil, reduziert werden.

Die Schürze oder der Rahmen wird hierzu, insbesondere vertikal, verfahren, bis sie, bzw. er, die Kavität berandet. Dann wird sie, bzw. er geschlossen und es wird Vakuum an die Kavität angelegt.

Im Anschluss an diese Aushärtezeit wird die Patrize abgehoben, beziehungsweise das Werkzeug, ggf. inklusive der Vakuumschürze / des Vakuumrahmens, geöffnet.

Im nächsten Schritt erfolgt das Entformen und die Entnahme des Karosseriebauteils.

Ein nach wenigstens einem Aspekt des beschriebenen Verfahrens hergestelltes Karosseriebauteil hat eine Sandwichstruktur, wobei eine erste LFI Schicht und eine zweite, faserverstärkte Kunststoffschicht, insbesondere eine zweite LFI Schicht, mit einem dazwischen angeordneten und vorgefertigten Schaumkern verpresst sind. Dieser ist einer gekrümmten Oberfläche oder einem gekrümmten Oberflächenabschnitt des Karosseriebauteils mit Abstand folgend vorgefertigt.

In einer Weiterbildung ist der Schaumkern mit zumindest abschnittsweise konstantem Abstand zur Oberfläche vorgefertigt. Alternativ oder ergänzend kann er mit zumindest abschnittsweise variablem Abstand zur Oberfläche vorgefertigt sein.

In einer Weiterbildung weist der Schaumkern abschnittsweise eine unterschiedliche Dicke auf, wodurch gezielt Einfluss auf die Steifigkeit des Karosseriebauteils bei geringem Gewicht genommen werden kann.

Die Anmelderin behält sich vor, einen Patentanspruch auf eine Presse zu richten, mit der das Verfahren gemäß wenigstens einem der vorhergehenden Aspekte ausführbar und das Karosseriebauteil herstellbar ist. Wobei die Presse zumindest aufweist: eine Matrize, eine Patrize und an dieser wenigstens eine mechanische und/oder magnetische Koppeleinrichtung zur Aufnahme und/oder zum Halten des Schaumkerns.

Je ein Ausführungsbeispiel eines erfindungsgemäßen Verfahrens zur Herstellung des Karosseriebauteils, sowie des Karosseriebauteils selbst, ist in den Figuren dargestellt. Anhand dieser wird die Erfindung nun näher erläutert.

Es zeigen:
Figur 1 ein erfindungsgemäß gefertigtes Karosseriebauteil,
Figur 2 einen vorgefertigten Schaumkern des Karosseriebauteils gemäß Figur 1,
Figur 3 einen Sandwichaufbau des Karosseriebauteils gemäß Figur 1 und
Figuren 4a bis 4j ein Ausführungsbeispiel des erfindungsgemäßen Verfahrens, veranschaulicht an einer schematisiert dargestellten, erfindungsgemäßen Presse.

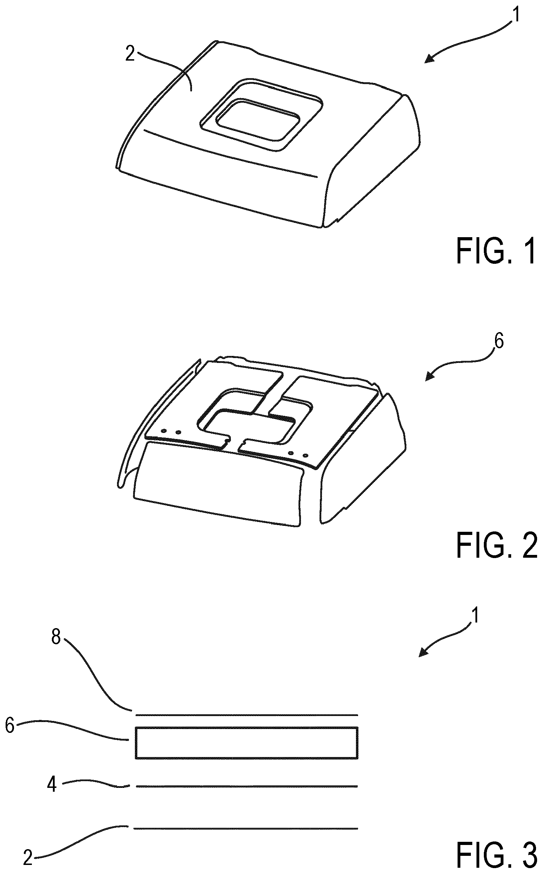

Gemäß Figur 1 ist das erfindungsgemäß hergestellte Karosseriebauteil ein Hochdach 1 eines LKWs. Es hat etwa die Grundform einer Wanne, wobei mittig eine Aussparung für beispielsweise eine Deckenluke vorgesehen ist.

Figur 3 zeigt einen Sandwichaufbau des Hochdachs 1 in schematischer Schnittdarstellung. Dargestellt ist der Schnitt in einer zur Horizontalebene um 180° gewendeten Anordnung des Hochdachs 1, in der dieses wie eine "Wanne" vor dem Betrachter liegt. Der Sandwichaufbau des Hochdachs 1 gemäß Figur 3 hat demzufolge eine die Außenhaut oder Sichtoberfläche repräsentierende, tiefgezogene Hartfolie 2, aus im Ausführungsbeispiel 3mm starkem ASA Polymer. Dessen Stärke ist vergleichsweise hoch gewählt, um mögliche Oberflächenfehler im innenseitig anschließenden Schichtaufbau kompensieren zu können und eine hohe Oberflächenqualität der Außenhaut des Hochdachs 1 zu erzielen. Mit der Hartfolie 2 ist in Richtung hin zur Innenseite des Hochdachs 1 eine erste LFI-Schicht 4 verbunden. In dieser Richtung folgt ein vorgefertigter PUR-Schaumkern 6, aus im Ausführungsbeispiel PUR-Hartschaum mit einem Raumgewicht von 200kg/m³, auf den, die Innenseite des Hochdachs 1 ausbildend, eine zweite LFI-Schicht 8 folgt. Die Schichten 2, 4, 6 und 8 sind verpresst und ausgehärtet und bilden das Hochdach 1, insbesondere ohne weitere Mittel, eigensteif aus.

Figur 2 zeigt den vorgefertigten Schaumkern 6, der im gezeigten Ausführungsbeispiel mehrteilig ist und aus sechs separaten Abschnitten besteht. Die Abschnitte sind jeweils an den Oberflächen des herzustellenden Karosserieteils 1 (Fertigteil) orientiert vorgefertigt. Im Prinzip folgen die Abschnitte den Oberflächen des Fertigteils 1 mit definiertem Abstand oder Offset, und zwar auch in gekrümmten Bereichen. Der Abstand ist dabei so bemessen, dass beiderseits des Schaumkerns 6 Raum für jeweils eine LFI Schicht 4, 8 und außenseitig Raum für eine Folie 2 vorgehalten ist (vgl. Fig. 3). Der vorgefertigte Schaumkern 6 weist somit gekrümmt vorgefertigte Abschnitte auf, die insbesondere im Bereich der nach lateral innen gekrümmten Seitenwangen, im Bereich des Übergangs der Deckplatte hin zu den Seitenwangen und im Bereich der Deckenluke gut zu erkennen sind (vgl. Fig.1, 2).

Die Abschnitte des Schaumkerns 6 können natürlich auch ebene Bereiche oder Bereiche mit nur sehr geringer Krümmung aufweisen.

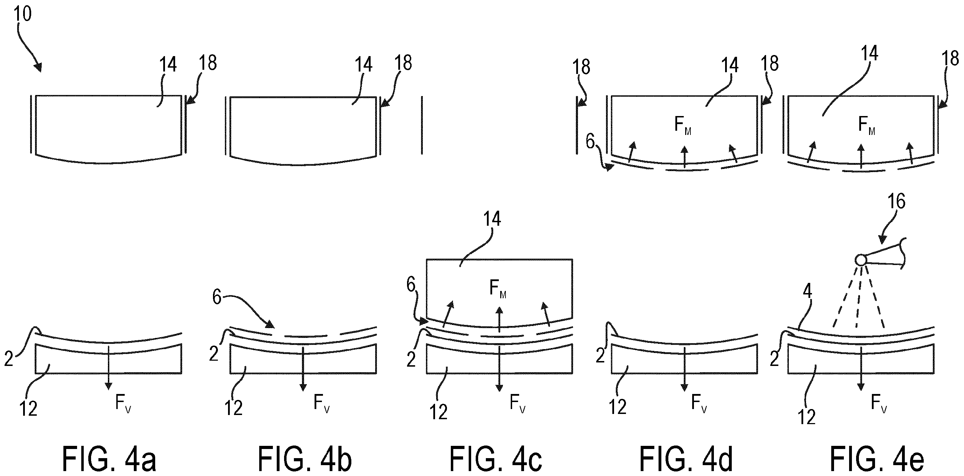

Die Figuren 4a - 4j beschreiben im Folgenden den Ablauf eines Ausführungsbeispiels des erfindungsgemäßen Verfahrens.

Schematisch dargestellt ist eine Presse, bzw. ein Presswerkzeug 10 mit einer Matrize 12 und einer Patrize 14.

In einem ersten Schritt des Verfahrens wird die zuvor tiefgezogene Folie 2 in die Matrize 12 eingelegt. Dabei ist gemäß Figur 4a die Patrize 14 von der Matrize 12 abgehoben. Die Folie 2 wird durch Vakuum Fv auf der Matrize 12 in Position gehalten.

Im nächsten Schritt gemäß Figur 4b wird auf die Folie 2, manuell oder automatisiert, der mehrteilige Schaumkern 6 in korrekter Relativposition zur Matrize 12 abgelegt. Dabei ist die Krümmung des vorgefertigten Schaumkerns 6, die aus dessen Orientierung an der Außen- und der Innenfläche des Fertigteils 1 resultiert, stark schematisiert dargestellt.

In Schritt gemäß Figur 4c wird das Werkzeug durch Absenken der Patrize 14 geschlossen. Letztgenannte hat einen Elektromagneten, der aktiviert wird. Im Zuge der Vorfertigung des Schaumkerns 6 eingeschäumte Bleche werden dadurch von der Magnetkraft F_{M} der Patrize 14 angezogen.

Im nächsten Schritt gemäß Figur 4d hebt die Patrize 14 von der Matrize 12 ab und nimmt aufgrund der Magnetkraft F_{M} den Schaumkern 6 mit. Die Folie 2 verbleibt auf der Matrize 12.

Es erfolgt nun das Auftragen der ersten LFI-Schicht 4 durch einen in den Zwischenraum zwischen Matrize 12 und Patrize 14 eingefahrenen LFI Sprühkopf 16. Die erste LFI-Schicht 4 wird dabei auf die Folie 2 aufgetragen. Auch bei diesen, wie bereits bei den vorangegangenen Schritten des Verfahrens, wird die Folie 2 permanent durch das Vakuum und dessen Kraft Fv in der Matrize 12 gehalten.

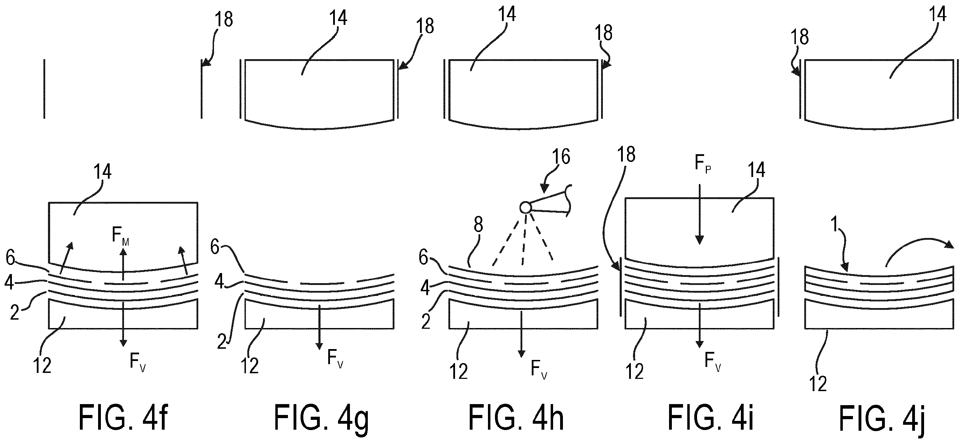

Im Schritt gemäß Figur 4f wird der mehrteilige Schaumkern 6 auf der noch "nassen" ersten LFI-Schicht 4 durch Absenken der Patrize 14 abgelegt. Dabei kann ein Nachdrücken erfolgen. Hierbei hat der gekrümmt vorgefertigte Schaumkern 6 den Vorteil, dass er im Gegensatz zu einem plattigen, ebenen Kern nicht zum Rücksprung neigt und zuverlässig in der Form sitzt.

Nach Deaktivierung des Elektromagneten hebt gemäß Figur 4g im nächsten Schritt die Patrize 14 vom in der Matrize 12 liegenden Schichtaufbau 2, 4, 6 wieder ab.

Im Schritt gemäß Figur 4h erfolgt dann das Auftragen einer zweiten LFI-Schicht 8 auf den Schaumkern 6 mittels dem LFI Sprühkopf 16, der bereits zum Auftragen der ersten LFI Schicht 4 gemäß Figur 4e eingesetzt wurde.

Danach wird im Verfahren eine Vakuumschürze 18 der Presse 10 verfahren, bis diese die von der Matrize 12 und der Patrize 14 begrenzte Kavität der Presse 10 berandet. Nachdem die Vakuumschürze 18 verschlossen wurde, wird an die Kavität über eine Vakuumeinheit Vakuum angelegt und die Kavität wird evakuiert, um Lufteinschlüsse zu minimieren.

Gemäß Figur 4i folgt mit verschlossener Vakuumschürze 18 der Schritt Pressen, in dem die Patrize 14 mit der Presskraft F_{P} auf dem Schichtaufbau 2, 4, 6, 8 aufsetzt.

Nach einer definierten Press- und Aushärtezeit öffnet die Vakuumschürze 18, verfährt zurück in ihre Grundstellung gemäß den vorangegangenen Figuren und gemäß Figur 4j hebt die Patrize 14 vom Sandwichaufbau 2, 4, 6, 8 des Hochdachs 1 ab, sodass dieses aus der Matrize 12 entnommen werden kann.

Offenbart ist ein Verfahren zur Herstellung eines faserverstärkten Karosseriebauteils, insbesondere eines Hochdachs, bei dem ein an einer Oberfläche des Fertigteils orientiert vorgefertigter Schaumkern zwischen einer LFI Schicht und einer weiteren Kunststoffmatrix Schicht angeordnet und mit den Schichten verpresst wird.

Offenbart ist zudem ein, insbesondere nach diesem Verfahren hergestelltes, faserverstärktes Karosseriebauteil, insbesondere ein Hochdach für einen LKW. Dieses hat einen Schaumkern, der zwischen einer ersten LFI Schicht und einer weiteren Kunststoffmatrix Schicht, insbesondere einer zweiten LFI Schicht, angeordnet ist und mit den Schichten verpresst ist. Der Schaumkern ist dabei an einer Oberfläche des Fertigteils orientiert vorgefertigt, anstatt der ersten LFI Schicht hinterschäumt zu sein.

### Bezugszeichenliste

- 1: Hochdach
- 2: Hartfolie
- 4: erste LFI-Schicht
- 6: PUR-Schaumkern
- 8: zweite LFI-Schicht
- 10: Presse
- 12: Matrize
- 14: Patrize
- 16: LFI Sprühkopf
- 18: Vakuumschürze / Vakuumrahmen

- F_{P}: Presskraft
- Fᵥ: Vakuum kraft
- F_{M}: Magnetkraft

## Patentansprüche

1. Verfahren zur Herstellung eines faserverstärkten Karosseriebauteils (1) in LFI-Sandwichbauweise, mit Schritten
- Auftragen einer ersten LFI Schicht (4) unmittelbar oder mittelbar auf eine Matrize (12);
- Ablegen eines ein- oder mehrteiligen Schaumkerns (6), der einer gekrümmten Oberfläche des Karosseriebauteils (1) mit Abstand folgend vorgefertigt ist, auf die erste LFI Schicht (4);
- Auftragen einer zweiten Schicht (8) auf den Schaumkern (6); und
- Pressen des so gebildeten Sandwichs mittels der Matrize (12) und einer Patrize (14).

2. Verfahren nach Anspruch 1, wobei auch die zweite Schicht (8) eine LFI-Schicht ist.

3. Verfahren nach Anspruch 1 oder 2, wobei das
- Auftragen der ersten LFI Schicht (4) mittelbar auf die Matrize (12) erfolgt, durch Schritte
- Einlegen einer Folie (2) in die Matrize (12), und
- Auftragen der ersten LFI Schicht (4) auf diese Folie (2).

4. Verfahren nach Anspruch 3, wobei die Folie (2) vor ihrem Einlegen tiefgezogen ist und in der Matrize (12) mittels Vakuum (Fv) positioniert und/oder gehalten wird.

5. Verfahren nach einem der vorhergehenden Ansprüche, mit einem Schritt
- Manuelles oder automatisiertes Positionieren des Schaumkerns (6) auf der Matrize (12)
vor dem Schritt
- Auftragen der ersten LFI Schicht (4) unmittelbar oder mittelbar auf die Matrize (12).

6. Verfahren nach Anspruch 5, mit einem Schritt
- Aufnehmen des positionierten Schaumkerns (6) durch die Patrize (14).

7. Verfahren nach Anspruch 6, wobei der Schaumkern (6) zum Aufnehmen mit der Patrize (14) mechanisch und/oder magnetisch gekoppelt wird.

8. Verfahren nach einem der vorhergehenden Ansprüche, wobei an oder in den Schaumkern (6) wenigstens ein mechanisches oder magnetisches Koppelelement, insbesondere ein Blech, an- oder eingeschäumt ist.

9. Verfahren nach einem der vorhergehenden Ansprüche, wobei die Patrize (14) wenigstens einen schaltbaren Elektromagneten aufweist.

10. Verfahren nach einem der vorhergehenden Ansprüche, wobei der Schritt
- Ablegen des vorgefertigten Schaumkerns (6) auf die erste LFI Schicht (4) durch Entkoppeln des Schaumkerns (6) von der Patrize (14) erfolgt.

11. Verfahren nach einem der vorhergehenden Ansprüche mit einem Schritt
- Nachdrücken des abgelegten Schaumkerns (6) an oder abschnittsweise in die erste LFI Schicht (4) durch die Patrize (14).

12. Verfahren nach einem der vorhergehenden Ansprüche, wobei der Schaumkern (6) aus Formschaum, insbesondere PUR, oder aus Partikelschaum, insbesondere EPS oder PP, vorgefertigt ist.

13. Faserverstärktes Karosseriebauteil, das insbesondere nach einem Verfahren gemäß einem der vorhergehenden Ansprüche hergestellt ist, mit einer ersten LFI Schicht (4) und einer zweiten, faserverstärkten Kunststoffschicht (8), insbesondere einer zweiten LFI Schicht, die mit einem zwischen ihnen angeordneten Schaumkern (6), der einer gekrümmten Oberfläche des Karosseriebauteils (1) mit Abstand folgend vorgefertigt ist, verpresst sind.
